Europäisches Patentamt

European Patent Office

Office européen des brevets

(11) Publication number: **0 205 263**
**A1**

# (12) EUROPEAN PATENT APPLICATION

(21) Application number: **86303808.9**

(22) Date of filing: **20.05.86**

(51) Int. Cl.⁴: **C 03 B 35/18**
**F 27 D 3/02, B 65 G 39/04**

(30) Priority: **08.06.85 GB 8514552**
**01.10.85 GB 8524139**

(43) Date of publication of application:
**17.12.86 Bulletin 86/51**

(84) Designated Contracting States:
**BE DE FR IT NL SE**

(71) Applicant: **TBA Industrial Products Limited**
**20, St. Mary's Parsonage**
**Manchester M3 2NL(GB)**

(72) Inventor: **Ogden, Geoffrey**
**19 Hawthorn Road**
**Bamford Rochdale(GB)**

(74) Representative: **Crux, John Anthony et al,**
**P.O. Box 20 Ashburton Road West Trafford Park**
**Manchester M17 1RA(GB)**

(54) Improvements in and relating to materials handling.

(57) The working surface of a roller primarily intended for the handling of sheet material at a relatively high temperature and/or having an easily damaged surface finish is constituted by expanded vermiculite particles.

EP 0 205 263 A1

- 1 -

## Improvements in and relating to materials handling

### Field of the invention

The invention relates to the handling of sheet materials. In particular, it is concerned with rollers for forwarding and/or handling sheet materials at elevated temperatures.

### Prior art

Both sheet glass and sheet steel production processes are carried out at elevated temperatures. For example, sheet steel may emerge from an annealing furnace at up to 1000°C.

In addition to this, both glass and steel, such as highly polished stainless steel, are vulnerable to surface scratching, especially when hot. Accordingly, the surface properties and heat resistance of conveyor rollers are extremely important indeed.

It is common practice to make rolls for such use from an asbestos paper or board product, by cutting out a large number of annuli and assembling them side-by-side to make a tube. This tube is then compressed axially whilst on a mandrel, prior to clamping up to form a roller with an asbestos surface.  This latter is ground and/or polished to
produce a finished roller.

Asbestos is a particularly preferred material for this
because it has good thermal properties allied to a degree
of softness such that little or no damage is caused to the
sheet product passing over it.

It has been proposed to replace asbestos paper/board in
this application by non-asbestos paper/board.  It has also
been proposed to use a roller with a ceramics surface.
However, non-asbestos papers/boards prove to have a limited
life at the temperatures usually encountered. ·Ceramic
fares very much better, but is too abrasive for most
applications.

Disclosure of the invention

In its broadest aspect, the invention comprises a roller
whose working surface is constituted by expanded
(exfoliated) vermiculite particles and a binder.  "Working
surface" means all that part of the roller surface which
sheet material may contact in passage over the roller.

It is particularly preferred that the roller should
comprise a plurality of annuli moulded or formed from
vermiculite and assembled together side-by-side to form a
tube.  This tube is preferably mounted on a supporting
mandrel provided with clamping means for locating and
retaining the annuli.

The annuli are preferably moulded or formed from a mix of
expanded vermiculite particles and the binder.  It will be
understood that "vermiculite" in this present context
includes minerals of similar characteristics and behaviour.

The annuli may be made by press mouldings which facilitates good control of the product density and whilst the surface finish of press moulded products is good, it will usually be necessary to apply a light grinding treatment to the roller surface before use.  This is in order to compensate for any dimensional and/or locational errors between the individual annuli when assembled as a tube.

Sufficient product integrity can usually be achieved simply by pressing vermiculite particles together.  However, if even greater integrity is desired then the vermiculite can be mixed with a sodium silicate binder, the latter constituting about 5% by weight of the final product. However, other particle sizes and/or binder proportions may be used to meet the requirements of a particular end use.

As is well-known there are at least two ways of producing expanded vermiculite; these may be broadly described as the thermal method and the electrolytic method.  The end products have very different physical properties and in the case of the latter method, the product exhibits better structural integrity in response to pressing in the absence of a binder.

If a binder is used, it is preferably capable of withstanding high temperatures.  Water-soluble silicates are particular preferred; sodium silicate can be used to at least 800°C and potassium silicate at even higher temperatures.  Expanded vermiculite is available in several grades, good results have been achieved by use of a relatively course grade, with an average particle size of the order of 5-7 mm.

CLAIMS:-

1.  A roller having a working surface characterised in that it is constituted by expanded (exfoliated) vermiculite particles.

2.  A roller according to Claim 1 further characterised in that it comprises a plurality of annuli of vermiculite assembled together side-by-side to form a tube.

3.  A roller according to Claim 2 characterised in that the tube is mounted on a supporting mandrel provided with clamping means for locating and retaining the annuli.

4.  A roller according to any preceding Claim characterised in that the annuli are moulded or formed from a mix of expanded vermiculite particles and binder.

5.  A roller according to any preceding Claim characterised in that the binder is a water-soluble silicate.

6.  A roller according to Claim 4 or Claim 5 characterised in that the binder constitutes up to about 10% by weight of the final product.

0205263

Application number

European Patent
Office

EUROPEAN SEARCH REPORT

EP 86 30 3808

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | US-A-3 116 053 (ERICSSON) <br> * Whole document * | 1-3 | C 03 B 35/18 <br> F 27 D 3/02 <br> B 65 G 39/04 |
| | --- | | |
| A | US-A-3 763 533 (BLOM) <br> * Whole document * | 1-3 | |
| | ----- | | |

TECHNICAL FIELDS
SEARCHED (Int Cl 4)

C 03 B 35/00
F 27 D 3/00
B 65 G 39/00
F 27 B 9/00

The present search report has been drawn up for all claims

| Place of search | Date of completion of the search | Examiner |
|---|---|---|
| THE HAGUE | 03-06-1986 | VAN DEN BOSSCHE W.L. |

EPO Form 1503. 03.82